# EUROPEAN PATENT APPLICATION

(11) **EP 2 746 745 A1**
(43) Date of publication of application: **25.06.2014**
(21) Application number: 12197793.8
(22) Date of filing: 18.12.2012
(51) Int. Cl.: G01N 11/12

(54) **Viscometer and method for measuring the viscosity of a fluid**

(71) Applicant: Kao Germany GmbH, 64297 Darmstadt (DE)
(72) Inventor: Weichaus, Dirk, 64404 Bickenbach (DE)
(74) Representative: Michalski Hüttermann & Partner Patentanwälte

(57) **Abstract**

It is provided a viscometer for measuring the viscosity of a fluid, comprising a down pipe for receiving the fluid, a ball for falling and/or rolling through the fluid inside the down pipe and an inlet valve for filling in the fluid into the down pipe, wherein the inlet valve is gastight connected with the down pipe for gastight sealing the down pipe at a pressure difference Δp between inside the down pipe and outside the down pipe of 0.1 bar < Δp ≤ 20.0 bar, particularly 0.5 bar ≤ Δp ≤ 15.0 bar, preferably 0.75 bar ≤ Δp ≤ 10.0 bar, more preferred 1.0 bar ≤ Δp ≤ 7.5 bar and most preferred 3.0 bar ≤ Δp ≤ 5.0 bar. Due to the increased accuracy directly measuring the viscosity of an aerosol comprising gaseous components an increased accuracy for estimating the spray pattern of an aerosol can is enabled.

## Description

The invention relates to a viscometer and a method for measuring the viscosity of a fluid, by means of which the viscosity of a fluid can be measured.

From DE 197 12 395 C1 a falling ball viscometer is known comprising a down pipe which is inserted into a bottom part. The bottom part comprises an inlet channel for filling a liquid to be measured into the down pipe. After the down pipe is filled with the liquid a ball falls through and/or rolls through the liquid inside the down pipe, wherein the time is measured, which is necessary that the ball passes a defined measuring track. The bottom part comprises a valve for filling in the liquid and sealing the down pipe against the filled in liquid. The valve can be actuated by means of pressurized air, wherein the bottom part comprises compressed air connections for connecting the pressurized air with the valve.

An important characteristic of an aerosol is the spray pattern of the discharged aerosol. For example, when a hair care product should be applied to human hair of a person by means of an aerosol can it is important to know how dense or wide the spray angle and/or spray pattern of the discharged aerosol will be. If a not suitable spray pattern would be present the person could be soiled in the case of a too wide spray pattern or a non-uniform treatment of the hair of the person could occur. For judging the spray pattern of a discharged aerosol of an aerosol can with a given outlet nozzle and given outlet valve it is known measuring the viscosity of the liquid part of the content of the aerosol can which is liquid at 1 bar by means of a falling ball viscometer as known from DE 197 12 395 C1, wherein the measured viscosity of the liquid component is used as a value corresponding to the estimated spray pattern of the aerosol can comprising this liquid. However the accuracy of the estimated spray pattern is poor.

It is an object of the invention providing measures enabling an increased accuracy for estimating the spray pattern of an aerosol can.

The solution of this object is provided according to the invention by a viscometer according to the features of claim 1 and a method for measuring the viscosity of a fluid according to the features of claim 10. Preferred embodiments of the invention are given by the dependent claims, which can constitute each solely or in combination an aspect of the invention.

An aspect of the invention is directed to a viscometer for measuring the viscosity of a fluid, comprising a down pipe for receiving the fluid, a ball for falling and/or rolling through the fluid inside the down pipe and an inlet valve for filling in the fluid into the down pipe, wherein the inlet valve is gastight connected with the down pipe for gastight sealing the down pipe at a pressure difference Δp between inside the down pipe and outside the down pipe of 0.1 bar < Δp ≤ 20.0 bar, particularly 0.5 bar ≤ Δp ≤ 15.0 bar, preferably 0.75 bar ≤ Δp ≤ 10.0 bar, more preferred 1.0 bar ≤ Δp ≤ 7.5 bar and most preferred 3.0 bar ≤ Δp ≤ 5.0 bar.

Due to the gastight sealing of the inlet valve the down pipe of the viscometer is suitable for receiving a pressurized gas, particularly a pressurized aerosol. The aerosol may be a mixture of a liquid part, which is liquid at 1 bar, and a propellant, which is gaseous at 1 bar. The liquid part of the aerosol may be a bulk phase comprising a mixture of a solvent, a polymer, color particles or other non-gaseous components. The sealing of the inlet valve does not only seal against a liquid but also against gaseous components which may comprise a much lower molecule size than a liquid. During the measurement when the ball moves through the aerosol mainly no aerosol may escape the down pipe. Particularly mainly no gaseous components of the aerosol may escape the down pipe so that it is possible measuring the dynamical viscosity of the aerosol directly without the need of measuring only the viscosity of the liquid part of the aerosol and assuming the behavior of the aerosol, particularly the spray pattern of the aerosol, based on the viscosity of the liquid part only. An indirect estimation of the dynamical viscosity of the aerosol may be replaced by a direct measuring avoiding several sources of errors and inaccuracies. Particularly the effect of a different amount of propellant of the aerosol can be considered at the viscosity measurement of the aerosol. Due to the increased accuracy directly measuring the viscosity of an aerosol comprising gaseous components an increased accuracy for estimating the spray pattern of an aerosol can is enabled. The viscometer may be further designed like a falling ball viscometer known as "Höppler viscometer".

The sealing is particularly gastight at the mentioned inside gas pressure when the down pipe is filled with dimethyl ether (DME) or propane or butane or compressed air or N₂ or O₂ or helium. Particularly preferred the sealing of the inlet valve is gastight at an inside gas pressure p of at 4.0 bar, particularly 6.0 bar, preferably 8.0 bar, more preferred 10.0 bar und most preferred 12.0 bar, wherein ambient pressure is mainly 1.0 bar, so that a significant safety reserve is given. The wording "gastight sealing" is understood such that a pressure drop Δp inside the down pipe at the mentioned inside gas pressure p, particularly p = 4.0 bar, is Δp ≤ 0.01 bar after 1 h.

If so, residual gas, particularly ambient air, inside the down pipe before the down pipe is filled with the aerosol via the inlet valve may stay inside the down pipe and may be compressed by the filled in aerosol. In this case the residual gase may be collected at an end, particularly the upper end, of the down pipe outside an area where the measurement of the falling time, which is necessary that the ball passes a defined measuring track of the down pipe, takes place. This is particularly suitable when the residual gas tends not to mix with the aerosol, particularly when a phase boundary arises between the aerosol and the residual gas. If so, the residual gas may be evacuated and/or purged with the propellant of the aerosol before filling in the aerosol, wherein the gastight sealing of the inlet valves seals the negative pressure inside the down pipe against the ambient air. If so, the residual gas may be discharged via the inlet valve itself and/or a separate pressure relief valve, wherein particularly some aerosol is discharged as well particularly for ensuring a mainly completely discharge of the residual gas and/or for washing the down pipe with the filled in aerosol. Particularly it is possible that the inlet valve is used both for filling in the fluid into the down pipe and discharging the content of the down pipe. If so, the inlet valve may be the only valve communicating with the inside volume of the down pipe, wherein particularly the end of the down pipe opposing the inlet valve may be just closed by a plug or the like. The accuracy of the viscosity measurement of the aerosol may be further increased.

Particularly the inlet valve comprises an inlet port for receiving an outlet nozzle of an aerosol vent, wherein the inlet port is particularly adapted for gastight receiving the outlet nozzle of the aerosol vent. The design of the inlet valve may be based on a typical standardized aerosol valve, which is adapted to be gas-tight connected with the down pipe. Due to the specific design of the inlet port the inlet valve may be especially adapted for communicating with an aerosol can. It is taken into account that the diameter and the shape of the outlet nozzle of the aerosol vent of the aerosol can differs significantly from the diameter and the shape of a standardized liquid supply. Particularly the inlet port may be designed for receiving a standardized outlet nozzle of an aerosol vent, so that a good, particularly gastight sealing between the inlet port and the outlet nozzle of the aerosol can may be ensured. In the case that the down pipe of the viscometer should be filled with a liquid instead of a gas or aerosol the inlet valve could and/or must be replaced by a different inlet valve comprising an inlet port for receiving a standardized liquid supply. For that purpose the inlet valve of the viscometer according to the invention is preferably detachably directly or indirectly connected with the down pipe.

Preferably only a gas sealing is provided between the inlet valve and the down pipe. The inlet valve may be made from a rigid material, particularly metal, providing a high durability for the inlet valve. Further a facilitated cleaning of the inlet valve may be provided. If so, the gas sealing may be easily replaced by another gas sealing adapted to provide a gastight sealing at a different pressure and/or against a different fluid inside the down pipe.

Particularly preferred the inlet valve mainly consists of a sealing material. The gas sealing and the inlet valve may be one-piece. The inlet valve may comprise an inlet port with a slit which may be opened by pressing an outlet nozzle of an aerosol vent of an aerosol can into the slit and which may be closed by the inside gas pressure inside the down pipe when the outlet nozzle is removed from the inlet valve. Particularly the inlet valve is formed convex at the face pointing into the down pipe so that the sealing effect of the inlet valve is self-energizing at increasing inside gas pressure inside the down pipe.

Particularly the inlet valve comprises a check valve. A discharge of aerosol filled into the down pipe via the inlet valve may be prevented or at least significantly reduced.

Preferably opposing to the inlet valve a discharge valve for discharging residual gas from inside the down pipe is provided. The down pipe may be easily emptied via the discharge valve so that the inlet valve may be designed as one-way valve.

Particularly preferred the discharge valve is designed as pressure relief valve. In the case that the inside gas pressure inside the down pipe may exceed a defined maximum pressure the filled in fluid may be discharged via the pressure relief valve. Particularly the pressure at which the pressure relief valve opens may be adjustable, so that a specific inside gas pressure inside the down pipe may be provided by means of the pressure relief valve. This facilitates comparing different aerosols since the measurement of each aerosol may take place at the same inside gas pressure.

Particularly the discharge valve is positioned mainly inside the down pipe, wherein the down pipe is closed outside the discharge valve by a plug. Particularly the plug may clamp a collar of the discharge valve between the plug and the inside lateral face of the down pipe. Aerosol discharged via the discharge valve, particularly while filling in the aerosol via the inlet valve, may escape the down pipe but is held back in a volume provided between the discharge valve and the plug. A soiling outside the viscometer may be avoided.

Preferably an inlet cap fastened to the down pipe and covering the inlet valve is provided and/or an outlet cap fastened to the down pipe and covering the discharge valve is provided. The cap may provide additional protection against an unwanted detaching of the inlet valve and/or the discharge valve due to an overpressure inside the down pipe. A safe connection of the inlet valve and/or of the discharge valve with the down pipe may be ensured. Particularly the inlet cap may comprise an opening for inserting an outlet nozzle of an aerosol vent of an aerosol can so that the outlet nozzle may be inserted into an inlet port of the inlet valve through the inlet cap.

A further aspect of the invention is directed to a method for measuring the viscosity of a fluid, comprising the steps of providing a falling ball viscometer, particularly designed as previously described, filling an aerosol into a down pipe of the viscometer, wherein the aerosol comprises a liquid part, which is liquid at 1 bar, and a propellant, which is gaseous at 1 bar, until a designated pressure difference Δp between inside the down pipe and outside the down pipe of 0.1 bar < Δp ≤ 20.0 bar, particularly 0.5 bar ≤ Δp ≤ 5.0 bar, preferably 0.75 bar ≤ Δp ≤ 10.0 bar, more preferred 1.0 bar ≤ Δp ≤ 7.5 bar and most preferred 3.0 bar ≤ Δp ≤ 5.0 bar is reached, and measuring the time of a ball falling and or rolling through the aerosol inside the down pipe along a predefined length while the designated inside gas pressure p is mainly maintained. The method may be further designed as previously described with respect to the viscometer. Due to the increased accuracy directly measuring the viscosity of an aerosol comprising gaseous components an increased accuracy for estimating the spray pattern of an aerosol can is enabled.

Particularly the down pipe is mainly gastight sealed for standing the designated inside gas pressure p while measuring. A leaking of the filled in fluid may be prevented or reduced to a negligible amount. Hence the measuring conditions, particularly the inside gas pressure, may be constant so that a high accuracy is enabled.

Particularly the liquid part of the aerosol is filled into the down pipe before the propellant of the aerosol is filled into the down pipe. Particularly it is possible filling the liquid part and the propellant of the aerosol separately into the down pipe. Preferably the liquid part of the aerosol may be filled into the down pipe via an open end of the down pipe, which is not closed by the inlet valve, a plug or the like. After the liquid part of the aerosol is filled into the down pipe, the open end of down pipe is sealed, particularly be means of the inlet valve or a plug. Subsequently the propellant of the aerosol is filled into the down pipe via the inlet valve so that a mixture of the liquid part and the propellant is present inside the down pipe. Particularly the liquid part may be tempered to a designated temperature before the propellant is filled in. The bulk phase of the aerosol, which may be provided as the After filling the propellant into the down pipe the aerosol present inside the down pipe may be well mixed and may comprise a mainly constant viscosity along the length of the down pipe.

Preferably the aerosol inside the down pipe is tempered to a mainly constant designated temperature before measuring. For instance a jacket filled with a tempered fluid, particularly water, is provided surrounding the down pipe. Preferably a thermometer is provided at least partially inside the jacket for measuring the temperature of the fluid inside the jacket. Particularly preferred the fluid inside the jacket comprises a higher heat capacity than the fluid filled into the down pipe facilitating tempering the fluid inside the down pipe to a specific temperature and maintaining this temperature over the measuring time. Hence the measuring conditions, particularly the temperature of the filled in fluid, may be constant so that a high accuracy is enabled.

Particularly preferred residual gas inside the down pipe and/or an overpressure inside the down pipe is discharged before measuring. The residual gas present inside the down pipe before filling in an aerosol may be partially or mainly completely discharged so that the composition present inside the down pipe for the measurement is not affected by the residual gas. Further it is possible preventing an unwanted overpressure by discharging a part of the fluid present inside the down pipe.

Particularly after measuring the aerosol is discharged via an inlet valve used for filling in the aerosol into the down pipe connected to the down pipe and/or via a discharge valve connected to the down pipe opposing the inlet valve. The aerosol may be discharged by means of devices already provided for another purpose like providing a filling in of an aerosol and/or preventing an overpressure. After the measurement most of the filled in fluid may be discharged so that a cleaning of the down pipe may occur at ambient pressure facilitating the cleaning of the down pipe.

Preferably the down pipe is cleaned by means of a cleaning liquid and/or by means of a cleaning gas after discharging the aerosol. The down pipe may be cleaned by washing the down pipe with a suitable liquid. Particularly gaseous components of the aerosol and/or fluid components of the aerosol may be washed out particularly by means of the cleaning gas like compressed air. Particularly in the case that components of the aerosol may stick to the down pipe, a cleaning liquid comprising a solvent, particularly acetone, isopropanol or water, for dissolving sticking parts of the aerosol, may be applied for washing the down pipe.

These and other aspects of the invention will be apparent from and elucidated with reference to the embodiments described hereinafter, wherein the described features can constitute each solely or in combination an independent aspect of the invention. In the drawings:

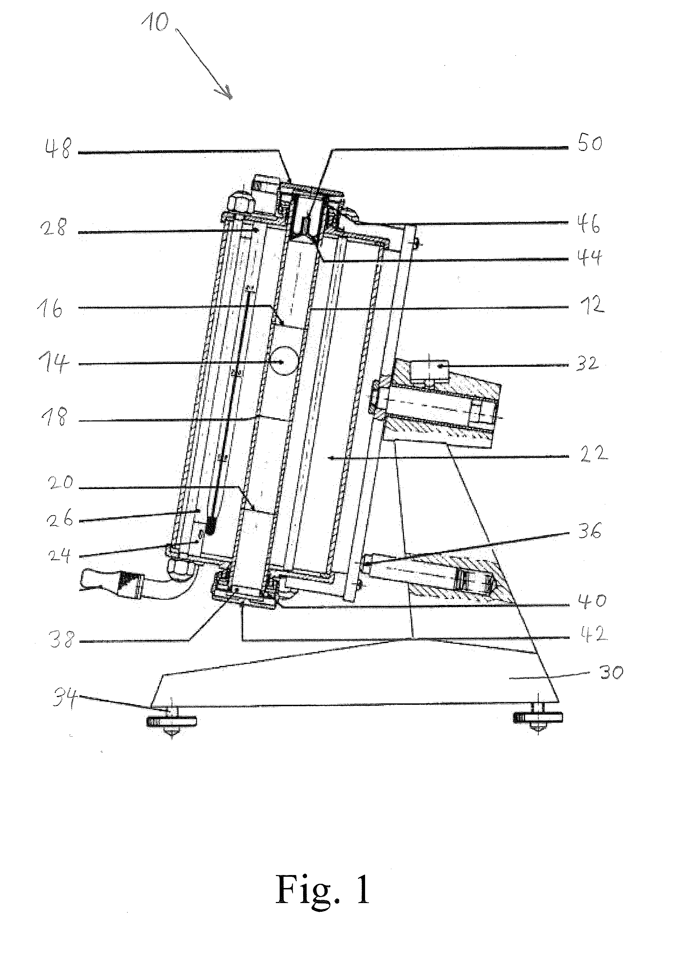

Fig. 1: shows a sectional side view of a falling ball viscometer.

The concept of the viscometer 10 according to the invention as illustrated in Fig. 1 is generally based on the design of a falling ball viscometer called "Höppler viscometer". The viscometer 10 comprises a down pipe12 and a ball 14 located inside the down pipe 12. The ball 14 may be kept at a defined place inside the down pipe 12 particularly by a magnetic force, by clamping or other means, so that the ball 14 may be released at a specific point of time at will. In the alternate the down pipe 12 may be turned upside down for starting the measurement. The ball 14 may move through the down pipe 12 particularly by falling and/or gliding and/or rolling downwards. When the ball 14 passes a first marking 16, a time measurement, particularly by means of a preferably automatically starting stop watch, may start. The time measuring may stop, when the ball 14 passes a second marking 18 or a third marking 20. The term needed by the ball for passing the length between two markings 16, 18, 20 corresponds to the dynamically viscosity of a fluid filled in the down pipe 12. If so, the down pipe 12 may be turned such that the upper end and the lower end of the down pipe 12 are exchanged so that a further measurement when the ball 14 moves back through the down pipe 12 may take place.

The down pipe 12 may be surrounded by a (water) jacket 22 for tempering the fluid inside the downpipe 12. The jacket 22 comprises an inlet connector 24 for filling a liquid of a specific temperature into the jacket 22 and an outlet connector 26 for discharging the liquid from the jacket 22. The temperature of the liquid inside the jacked may be checked by means of a thermometer 28. When the temperature of the liquid inside the jacket does not change over a sufficient term, the temperature of the fluid inside the down pipe 12 and the temperature of the liquid inside the jacket 22 are mainly the same.

The down pipe 12 may be connected particularly via the jacket 22 with a stand 30. The stand 30 comprises a bubble level 32 for ensuring that the stand 30 is placed mainly exact horizontally onto a ground. If so, a correct alignment of the stand 30 may be corrected by means of at least one foot screw 34. Further the stand may comprise a stop bolt 36 by which a defined inclination of the down pipe 12 may be provided. Particularly the amount by which the stop bolt 36 protrudes from the stand 30 can be changed so that different angles of inclination may be provided for the down pipe 12.

At the lower end of the down pipe 12 an inlet valve 38 is provided, wherein in the illustrated embodiment a gas sealing 40 is provided in radial direction between the inlet valve 38 and the down pipe 12. Due to the gas sealing 40 the inlet valve 38 may be gastight sealed even at a significantly increased inside gas pressure inside the down pipe 12 so that the viscometer 12 may be used for measuring the dynamically viscosity of a pressurized fluid, particularly an aerosol, which may be filled into the down pipe 12 in a pressurized manner via the inlet valve 38, particularly originating from an aerosol can. The inlet valve 38 particularly may comprise an inlet port especifically designed for corresponding to the design of a standardized outlet nozzle of an aerosol vent of an aerosol can so that the outlet nozzle may gastight fit into the inlet port of the inlet valve 38. The inlet valve 38 may be covered by an inlet cap 42 connected to the down pipe 12 and/or the jacket 22.

At the upper end of the down pipe 12 a discharge valve 44, particularly designed as pressure relief valve, is provided particularly for discharging residual gas inside the down pipe 12 and/or limiting the inside gas pressure inside the down pipe 12 to a specific predefined pressure. In the illustrated embodiment the discharge valve 44 is gastight sealed by a further gas sealing 46 provided in radial direction between the discharge valve 44 and the down pipe 12, wherein the characteristics of the further gas sealing 46 correspond mainly to the characteristics of the gas sealing 40. The discharge valve 44 is covered by an outlet cap 48 connected to the down pipe 12 and/or the jacket 22. Particularly the outlet cap 48 may press the further gas sealing 46 against the down pipe 12 so that the outlet cap 48 and the further gas sealing 46 may provide the function of a plug plugging the upper end of the down pipe 12. Fluid discharged via an outlet port 50 of the discharge valve 44, particularly designed as a check valve, may be kept inside a volume provided between the discharge valve 44 and the outlet cap 48.

## Claims

1. Viscometer for measuring the viscosity of a fluid, comprising
a down pipe (12) for receiving the fluid,
a ball (14) for falling and/or rolling through the fluid inside the down pipe (12) and an inlet valve (38) for filling in the fluid into the down pipe (12),
wherein the inlet valve (38) is gastight connected with the down pipe (12) for gastight sealing the down pipe (12) at a pressure difference Δp between inside the down pipe (12) and outside the down pipe (12)of 0.1 bar < Δp ≤ 20.0 bar, particularly 0.5 bar ≤ Δp ≤ 15.0 bar, preferably 0.75 bar ≤ Δp ≤ 10.0 bar, more preferred 1.0 bar ≤ Δp ≤ 7.5 bar and most preferred 3.0 bar ≤ Δp ≤ 5.0 bar.

2. Viscometer according to claim 1 wherein the inlet valve (38) comprises an inlet port for receiving an outlet nozzle of an aerosol vent, wherein the inlet port is particularly adapted for gastight receiving the outlet nozzle of the aerosol vent.

3. Viscometer according to claim 1 or 2 wherein only a gas sealing (40) is provided between the inlet valve (38) and the down pipe (12).

4. Viscometer according to anyone of claims 1 to 3 wherein the inlet valve (38) mainly consists of a sealing material.

5. Viscometer according to anyone of claims 1 to 4 wherein the inlet valve (38) comprises a check valve.

6. Viscometer according to anyone of claims 1 to 5 wherein opposing to the inlet valve (38) a discharge valve (44) for discharging residual gas from inside the down pipe (12) is provided.

7. Viscometer according to claim 6 wherein the discharge valve (44) is designed as pressure relief valve.

8. Viscometer according to claim 6 or 7 wherein the discharge valve (44) is positioned mainly inside the down pipe (12), wherein the down pipe (12) is closed outside the discharge valve by a plug (46, 48).

9. Viscometer according to anyone of claims 1 to 8 wherein an inlet cap (42) fastened to the down pipe (12) and covering the inlet valve (38) is provided and/or an outlet cap (48) fastened to the down pipe (12) and covering the discharge valve (44) is provided.

10. Method for measuring the viscosity of a fluid, comprising the steps of providing a falling ball viscometer (10), particularly according to anyone of claims 1 to 9,
filling an aerosol into a down pipe (12) of the viscometer (10), wherein the aerosol comprises a liquid part, which is liquid at 1 bar, and a propellant, which is gaseous at 1 bar, until a designated pressure difference Δp between inside the down pipe (12) and outside the down pipe (12)of 0.1 bar < Δp ≤ 20.0 bar, particularly 0.5 bar ≤ Δp ≤ 15.0 bar, preferably 0.75 bar ≤ Δp ≤ 10.0 bar, more preferred 1.0 bar ≤ Δp ≤ 7.5 bar and most preferred 3.0 bar ≤ Δp ≤ 5.0 bar is reached, and measuring the time of a ball (14) falling and or rolling through the aerosol inside the down pipe (12) along a predefined length while the designated inside gas pressure p is mainly maintained.

11. Method according to claim 10 wherein the liquid part of the aerosol is filled into the down pipe (12) before the propellant of the aerosol is filled into the down pipe (12).

12. Method according to claim 10 or 11 wherein the down pipe (12) is mainly gastight sealed for standing the designated inside gas pressure p while measuring.

13. Method according to anyone of claims 10 to 12 wherein the aerosol inside the down pipe (12) is tempered to a mainly constant designated temperature before measuring.

14. Method according to anyone of claims 10 to 13 wherein residual gas inside the down pipe (12) and/or an overpressure inside the down pipe (12) is discharged before measuring.

15. Method according to anyone of claims 10 to 14 wherein after measuring the aerosol is discharged via an inlet valve (38) used for filling in the aerosol into the down pipe (12) connected to the down pipe (12) and/or via a discharge valve (44) connected to the down pipe (12) opposing the inlet valve (38).
